# EUROPEAN PATENT APPLICATION

(11) **EP 2 083 337 A1**
(43) Date of publication of application: **29.07.2009**
(21) Application number: 09151331.7
(22) Date of filing: 26.01.2009
(51) Int. Cl.: G05B 19/418

(54) **Product lifecycle management method and apparatus**

(30) Priority: 25.01.2008 US 20254
(71) Applicant: Rockwell Automation Technologies, Inc., Mayfield Heights, OH 44124 (US)
(72) Inventor: Morse, Richard A., Hudson, OH 44236 (US); Weber, Jason, Wauwatosa, WI 53226 (US)
(74) Representative: Grünecker, Kinkeldey, Stockmair & Schwanhäusser Anwaltssozietät

(57) **Abstract**

A method for synchronizing activities during design of an industrial automated system wherein the automated system includes a plurality of different features and the design of the automated system requires at least first and second different information types, the method comprising the steps of using a first software program to specify a first type system definition including a set of first information type instances corresponding to the automated system, after the first type system defintion has been specified, using a second software program to specify a second type system definition including a set of second information type instances corresponding to the automated system, after the second type system definition has been specified, comparing the first and second system definitions to identify system features supported by only one of the first and second type system definitions and where only one of the first and second type system definitions supports a system feature, the second software program providing notice to the first software program indicating that the first and second type system definitions are imperfectly correlated. The information types may include enterprise resource planning (ERP), mechanical, control logic and electrical layout information types.

## Description

Not applicable.

### STATEMENT REGARDING FEDERALLY SPONSORED RESEARCH OR DEVELOPMENT

Not applicable.

### BACKGROUND OF THE INVENTION

The present invention relates to systems for designing and generating control code for automated manufacturing systems and more specifically to a system for synchronizing design efforts among various designers using different software programs that specify different parts of the manufacturing system.

The process of completely designing all aspects of a manufacturing process is extremely complex and requires input from many different people that have varying skill sets. To this end, an exemplary design process often starts with a mechanical engineer using a CAD software program at one workstation to design a product to be manufactured.

Once the product is completely specified, a second mechanical engineer that specializes in designing mechanical systems for manufacturing products receives the product design and uses a second CAD program at a second workstation to design a manufacturing cell or multiple cells required to manufacture the product. Here the cell designing process typically includes selecting devices or assemblies to be added to one or more cells to perform manufacturing processes, placing the devices in the cells, specifying actions or processes to be performed by the devices in the cells, specifying limitations or characteristics of the processes and sequencing the device actions to perform the overall manufacturing process. In at least some cases device object type libraries have been developed that help the mechanical engineer perform the cell specifying process.

After or during the manufacturing cell specifying process, a person (e.g., an ERP expert) responsible for enterprise resource planning (ERP) for a facility may start designing an ERP system using ERP software on another workstation. As the label implies, an ERP expert uses the ERP software to plan use of facility resources including cost to construct manufacturing cells, cost to run the cells, cost to maintain the cells, requirements for delivery of materials to cells for feeding the manufacturing process, training requirements for employees needed to support the manufacturing process, etc.

In addition, after the mechanical cell specifying process, a control engineer receives parts or all of the cell specifications and uses a programming workstation to generate programming code for controlling the cell devices to perform the specified sequence of processes. Programming is a sophisticated skill and often is performed in the Relay Ladder Logic (RLL language) that can be run by a programmable logic controller (PLC) or some other controller type.

Moreover, after the mechanical cell specifying process and after or during the control code specifying process, an electrical engineer receives parts or all of the cell specifications and uses a an electrical layout software package to generate electrical layouts for delivering power to the devices within the cells.

During the overall design process, when a first of the engineers or experts involved in the process specifies information for a manufacturing system that is inconsistent with information previously specified by another or a subset of the other engineers or experts, the first engineer needs to notify the other engineers or experts of the inconsistency so that the others can take steps to synchronize the design process. Thus, for instance, where a control engineer adds logic or code to a PLC program to support an emergency stop for a clamp in a first cell where there is no control panel in the first cell (here it is assumed that a control panel is required to provide an emergency stop), the inconsistency must be recognized by the control engineer and must be manually communicated to the mechanical engineer so that a control panel can be added to the cell.

While the manufacturing line design process described above is becoming ubiquitous, unfortunately identification of inconsistencies between different information types and communication of those inconsistencies to others working on designing and instantiating a manufacturing process is flawed for at least two reasons. First, an engineer or expert working in a first system may not recognize when information specified using the first system is inconsistent with information specified using one or more of the other systems. Here, all of the engineers and experts may simply miss an inconsistency between the specified information of different types and the error may only be able to be recognized far down the design line at a time when it is far more complex and expensive to eliminate the inconsistency from the system.

Second, even when an engineer or expert recognizes an inconsistency, the engineer may fail to provide notice to all of the others working on the system that have a need to know about the inconsistency or one or more of the others that receive notice may not address the inconsistency when the notice is received. Here note that current systems rely on manual notice to identify inconsistencies when moving up stream in the design process.

The two flaws with the system described above are exacerbated in cases where the different specifying systems are used in parallel so that different engineers and experts are specifying information simultaneously in many cases that can lead to inconsistencies. In addition, the flaws are further exacerbated in cases where more than one engineer or expert may be working on a single system type to specify required information during a complex or large design case. For instance, in some cases two or more mechanical engineers may work simultaneously or in series to design a cell or related cells and one engineer may be unaware of what the other is doing so that inconsistencies cannot be easily identified.

### BRIEF SUMMARY OF THE INVENTION

It has been recognized that where different systems are used to specify different information types needed to together define a manufacturing system, inconsistencies between specified information of the different types can be automatically identified and notice of the inconsistencies can be provided so that the inconsistencies can be eliminated. Moreover, it has been recognized that where inconsistencies occur between different information types, a system can automatically identify possible solutions for eliminating the inconsistencies and those solutions can either be suggested to engineers or experts or may be implemented automatically, in at least some embodiments.

To facilitate the process of recognizing information inconsistencies, information in the different systems is stored as objects and the objects or information in the objects specified using the different systems can be compared to identify inconsistencies. For instance, in the case of a mechanical specifying system and a control specifying system, the mechanical system may include a library of mechanical device objects that can be used to define a manufacturing cell and the control system may include a separate set of add on instructions (AOI) for each of the device objects that specifies actions that each device can perform along with code or information useable to generate code for controlling the associated device. Here, where an AOI is used to specify logic and there is no associated device in a specified cell or where an AOI action is specified and associated code is provided where the action is not specified for a corresponding cell, an inconsistency can readily be identified and communicated to a mechanical engineer so that the inconsistency can be eliminated.

Consistent with the above, at least some embodiments of the invention include a method for synchronizing activities during design of an industrial automated system wherein the automated system includes a plurality of different features and the design of the automated system requires at least first and second different information types, the method comprising the steps of using a first software program to specify a first type system definition including a set of first information type instances corresponding to the automated system, after the first type system definition has been specified, using a second software program to specify a second type system definition including a set of second information type instances corresponding to the automated system, after the second type system definition has been specified, comparing the first and second system definitions to identify system features supported by only one of the first and second type system definitions and where only one of the first and second type system definitions supports a system feature, the second software program providing notice to the first software program indicating that the first and second type system definitions are imperfectly correlated.

In at least some embodiments the first and second information types each includes a different one of mechanical and control logic information types. In at least some embodiments the first and second information types each includes a different one of enterprise resource planning, mechanical, control logic and electrical layout information types.

Some cases further include the steps of, prior to the step of using the first software program to specify a first type system definition providing a first information type library including first type information instances for each of the different feature types that may be included in the automated system and providing a second information type library including second type information instances for each of the first type information instances, the step of using the first software program to specify a first type system definition including using the first software program to select first type information instances from the first type information library to provide the first type system definition for the automated system and the step of using a second software program to specify a second type system definition including using the second software program to select second type information instances from the second type information library to provide a second type system definition for the automated system.

In at least some embodiments the first type information library includes a device library including device instances corresponding to devices that may be used during an automated system design process and actions that each device may perform and the second type information library includes an add on instruction (AOI) library including an AOI for each of the devices in the device library wherein each AOI includes logic for controlling an associated device during each of the actions that the device may perform. In at least some embodiments each device instance includes a device software object and each AOI includes an AOI software object. Some cases further include the steps of, after the second type system definition has been specified, using the first software program to alter the first type system definition so that the first and second type system definitions are perfectly correlated.

Some cases further include the steps of, after the second type system definition has been specified, using the first software program to alter the first type system definition by adding an additional instance of the first information type that is unsupported by the second type system definition, the first software program providing notice to the second software program indicating that the additional instance of the first information type has been added to the first type system definition. Some cases further include the steps of, after the second type system definition has been specified, using the first software program to alter the first type system definition by deleting at least one of the specified first information type instances from the first type system definition, the first software program providing notice to the second software program indicating that the at least one of the first information type instance has been removed from the first type system definition.

In at least some embodiments the notice indicates the system feature that is only supported by one of the first and second type system definitions, when the notice is received, the method further including the step of, when only the first system definition supports the system feature, running the first program to identify the first information type instance in the first type system definition that supports the system feature and, when only the second system definition supports the system feature, running the first program to identify a first information type instance that supports the system feature.

Some cases further include the step of, when the first program identifies the first information type instance in the first type system definition that supports the system feature, running the first program to delete the first information type instance from the first type system definition. Some cases further include the step of, when the first program identifies the first information type instance that supports the system feature, running the first program to add the first information type instance to the first type system definition.

Some cases further include the steps of, when only the first system definition supports the system feature, presenting the identified first information type instance in the first type system definition that supports the system feature and, when only the second system definition supports the system feature, presenting the identified first information type instance that supports the system feature. In at least some embodiments the notice is provided via an extensible markup language.

A method for synchronizing activities during design of an industrial automated system wherein the automated system includes a plurality of different features and the design of the automated system requires a plurality of different information types, the method comprising the steps of (i) using different software programs to specify a plurality of different type system definitions for the automated system, each program used to specify a different one of the system definitions, each type system definition including a set of different information type instances corresponding to the automated system, (ii) comparing the different type system definitions to identify system features supported by less than all of the different type system definitions, (iii) where less than all of the different type system definitions supports a system feature and a subset of the software programs were used to specify the different type system definitions that do support the system feature, automatically providing notice to the software programs other than the subset of the software programs used to specify the different type system definitions that do support the system feature indicating that the different type system definitions are imperfectly correlated.

In at least some embodiments the step of comparing includes comparing to identify system features supported by only one of the different type system definitions. In at least some embodiments at least a subset of the plurality of information types each includes a different one of mechanical and control logic information types. In at least some embodiments at least a subset of the plurality of information types each includes a different one of enterprise resource planning, mechanical, control logic and electrical layout information types.

Some cases further include the steps of using any of the software programs to make changes to associated system definitions and repeating steps (ii) and (iii) to identify system features that are not completely supported and provide notice of imperfectly correlated system definitions to software programs. In at least some embodiments each information type instance is a software object and wherein each information type includes objects of a type that are different than objects of the other information types.

A method for synchronizing activities during design of an industrial automated system, the method comprising the steps of providing a device library including instances of devices that may be used during the design process and actions that each device may perform, creating an add on instruction (AOI) library including an AOI for each of the devices in the device library wherein each AOI includes logic for controlling an associated device during each of the actions that the device may perform, using a first software program to specify a cell definition for the automated system, the cell definition including a set of devices and at least one action for each instance of a devices in the set, after the cell definition is specified, using the second software program to select AOIs from the AOI library to provide a logic specification for controlling the automated system, after the logic specification has been specified, where at least one of (i) at least one AOI in the logic specification specifies logic for a device other than the devices in the cell definition and (ii) at least one of the devices in the cell definition specifies a device that is unsupported by the logic specification, the second software program providing notice to the first software program that the cell definition imperfectly correlates with the logic specification.

In at least some embodiments the step of providing notice includes, where at least one AOI in the logic specification specifies logic for a device other than the devices in the cell definition, indicating that at least one AOI in the logic specification that specifies logic for a device other than the devices in the cell definition and, where at least one of the devices in the cell definition specifies a device that is unsupported by the logic specification, indicating that at least one of the devices in the cell definition that specifies a device that is unsupported by the logic specification.

Some cases further include the step of, where at least one of the devices in the cell definition specifies a device that is unsupported by the logic specification, running the first program to delete the one of the devices from the cell definition. Some cases further include the step of, where at least one AOI in the logic specification specifies logic for a device other than the devices in the cell definition, running the first program to identify a device associated with the at least one AOI in the logic specification. Some cases further include indicating the identified device to a first program user.

Some embodiments include an apparatus for synchronizing activities during design of an industrial automated system wherein the automated system includes a plurality of different features and the design of the automated system requires at least first and second different information types, the apparatus comprising at least one processor programmed to perform the steps of receiving information from a user specifying a first type system definition including a set of first information type instances corresponding to the automated system, after the first type system definition has been specified, receiving information from a user specifying a second type system definition including a set of second information type instances corresponding to the automated system, after the second type system definition has been specified, comparing the first and second system definitions to identify system features supported by only one of the first and second type system definitions and where only one of the first and second type system definitions supports a system feature, providing notice to the user that specified the first type system definition indicating that the first and second type system definitions are imperfectly correlated.

Other embodiments include a design system for synchronizing activities during design of an industrial automated system, the design system comprising a first database storing a device library including instances of devices that may be used during the design process and actions that each device may perform a second database storing an add on instruction (AOI) library including an AOI for each of the devices in the device library wherein each AOI includes logic for controlling an associated device during each of the actions that the device may perform, a first processor running a first software program usable by a first user to specify a cell definition for the automated system, the cell definition including a set of devices and at least one action for each instance of a devices in the set, after the cell definition is specified, a second processor running a second software program usable by a second user to select AOIs from the AOI library to provide a logic specification for controlling the automated system, after the logic specification has been specified, the second processor further programmed to perform the steps of comparing the logic specification to the cell definition and, where at least one of (i) at least one AOI in the logic specification specifies logic for a device other than the devices in the cell definition and (ii) at least one of the devices in the cell definition specifies a device that is unsupported by the logic specification, providing notice to the first software program that the cell definition imperfectly correlates with the logic specification.

To the accomplishment of the foregoing and related ends, the invention, then, comprises the features hereinafter fully described. The following description and the annexed drawings set forth in detail certain illustrative aspects of the invention. However, these aspects are indicative of but a few of the various ways in which the principles of the invention can be employed. Other aspects, advantages and novel features of the invention will become apparent from the following detailed description of the invention when considered in conjunction with the drawings.

### BRIEF DESCRIPTION OF THE SEVERAL VIEWS OF THE DRAWINGS

Fig. 1 is a schematic illustrating a system including a mechanical specifying system and a control specifying system that is consistent with at least some aspects of the present invention;

Fig. 2 is a schematic illustrating an exemplary device library that is consistent with at least some aspects of the present invention;

Fig. 3 is a screen shot illustrating cell specifying tools and an exemplary cell that may be presented via one of the display screens in Fig. 1;

Fig. 4 is a schematic illustrating an exemplary underlying cell definition that is consistent with at least some aspects of the present invention;

Fig. 5 is a schematic illustrating an exemplary add on instruction library that is consistent with at least some aspects of the present invention;

Fig. 6 is a schematic illustrating an underlying control definition that is consistent with at least some aspects of the present invention;

Fig. 7 is a flow chart illustrating a process for generating a cell definition and a control definition, identifying inconsistencies and automatically providing a notice of those inconsistencies;

Fig. 8 is a screen shot that may be presented via a workstation display for notifying a workstation user that inconsistencies exist between a control definition and a cell definition;

Fig. 9 is a sub-process that may be added to the process shown in Fig. 7 for providing notice to a first engineer when a second engineer eliminates inconsistencies between cell and control definitions;

Fig. 10 is similar to Fig. 9;

Fig. 11 is a schematic similar to the schematic of Fig. 1, albeit showing a system that further includes an electrical specifying system and an ERP specifying system; and

Fig. 12 is a screen shot similar to the screen shot shown in Fig. 8, albeit indicating or suggesting ways in which inconsistencies between cell and control definitions can be eliminated.

### DETAILED DESCRIPTION OF THE INVENTION

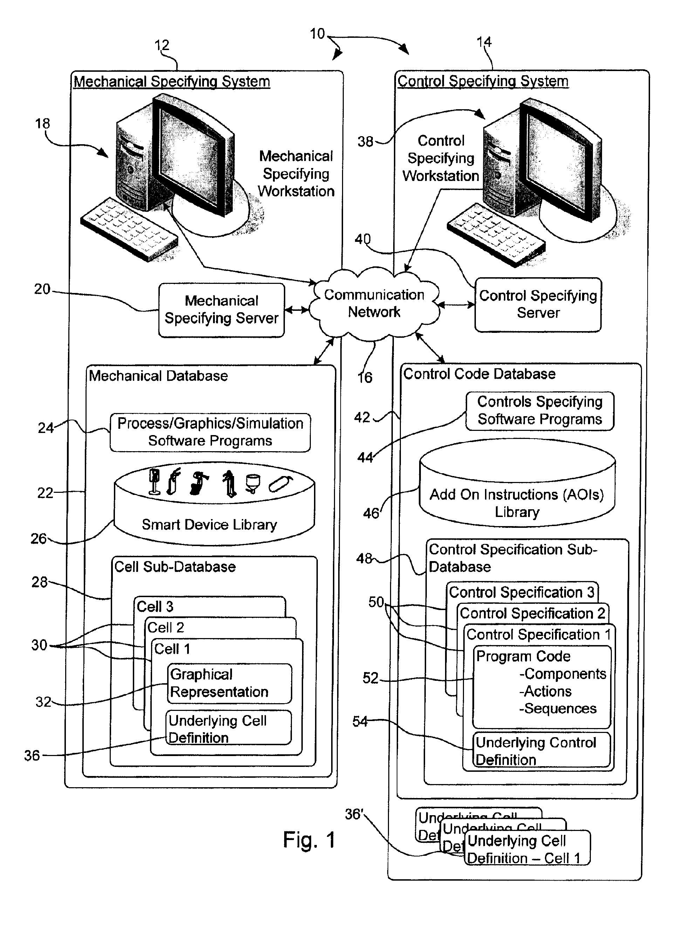

Referring now to the drawings wherein like reference numerals correspond to similar elements throughout several views and, more specifically, referring to Fig. 1, the present invention will be described in the context of an exemplary design system 10 that includes a mechanical specifying system 12, a control specifying system 14 and a communication network 16. Unless indicated otherwise, hereinafter a user of system 12 will be referred to generally as a mechanical engineer and a user of system 14 will be referred to as a control engineer. System 12 includes a mechanical specifying workstation 18, a server 20 and a database 22. Workstation 18 includes a processor based computer, an output devices such as a flat panel display screen and an input device such as a keyboard, mouse device, trackball, etc. Server 20 runs programs that enable a user of workstation 18 to define products to be manufactured and thereafter to define a manufacturing process for producing the designed products. To this end, to specify a complete manufacturing process, devices or manufacturing assemblies required to perform the process must be defined along with actions to be performed by each one of those devices. In addition, sequences of actions that each device and combinations of devices need to perform must also be specified. Software for specifying devices, actions and sequences is known in the art and therefore will not be described here in detail.

Referring still to Fig. 1, database 22 includes mechanical specifying software programs 24, a device library 26 and a cell sub-database 28. Software 24 includes the software usable by server 20 to enable a workstation user to define a product, select devices required to facilitate a manufacturing process to produce the defined product, specify actions to be performed by each of the selected devices and to specify sequences of actions for the devices. In addition, software programs 24 may include a simulation software program that can receive device control commands from a programmable automation controller (PAC) or some other type of controller, use those control commands to drive a simulated representation of the designed machine line via workstation 18 or some other workstation and to provide feedback signals to the PLC as actions are performed so that a process can be fully simulated prior to building a machine line associated with the design process.

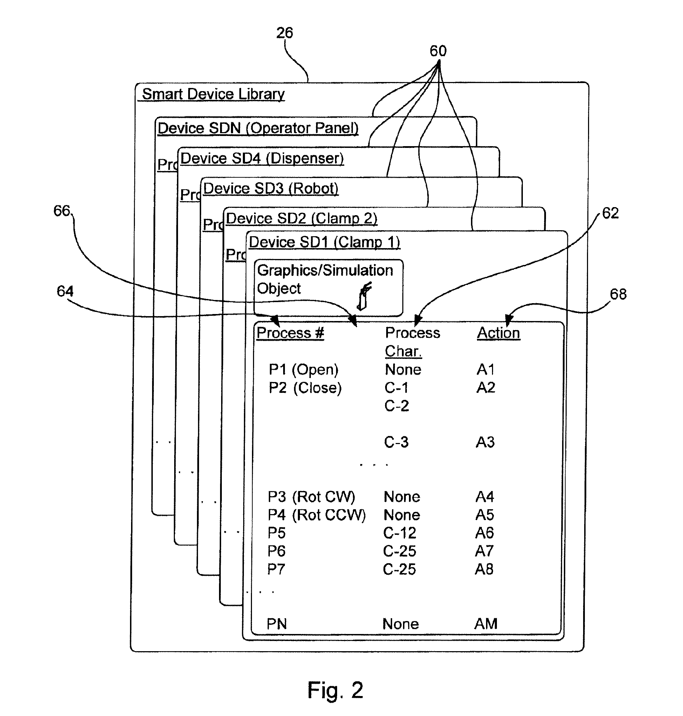

Referring still to Fig. 1 and now also to Fig. 2, device library 26, as the label implies, includes a library of data constructs, separate data constructs for each device that may be used in system 12 to construct a manufacturing configuration for manufacturing a product. Exemplary devices included in the present explanation include first and second different types of clamp devices SD1 and SD2, respectively, a robot SD3, a dispenser device SD4 and an operator panel SDN. In Fig. 2, library 26 is shown as including data constructs 60 for each one of the devices SD1 through SDN. Each of the data constructs 60 includes similar types of information and is used in a similar fashion and therefore, in the interest of simplifying this explanation, only the construct associated with device SD1 (i.e., the first type of clamp) is described here in any detail.

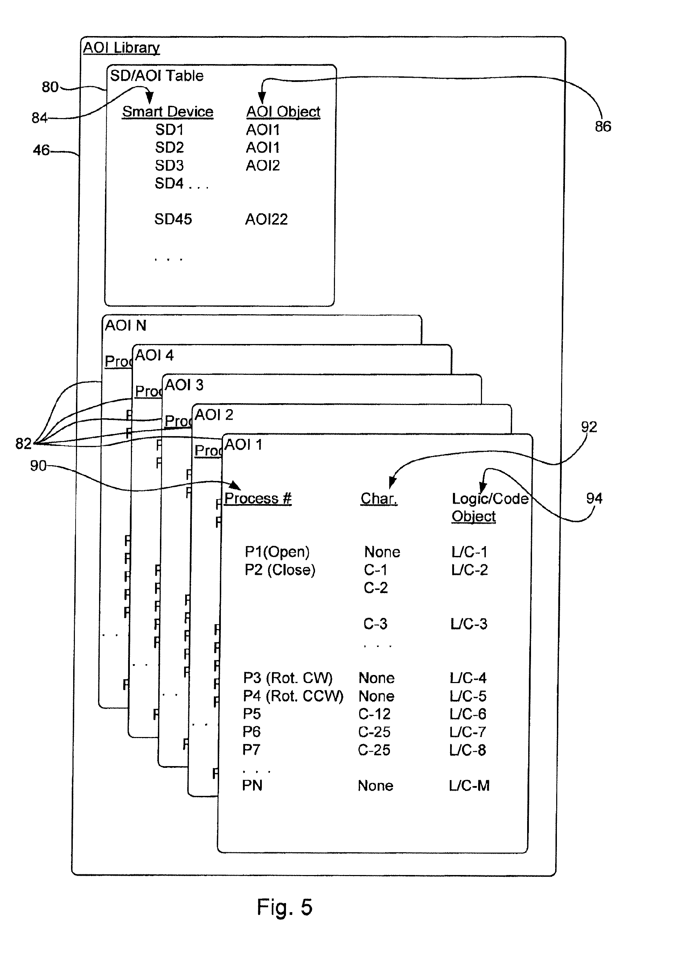

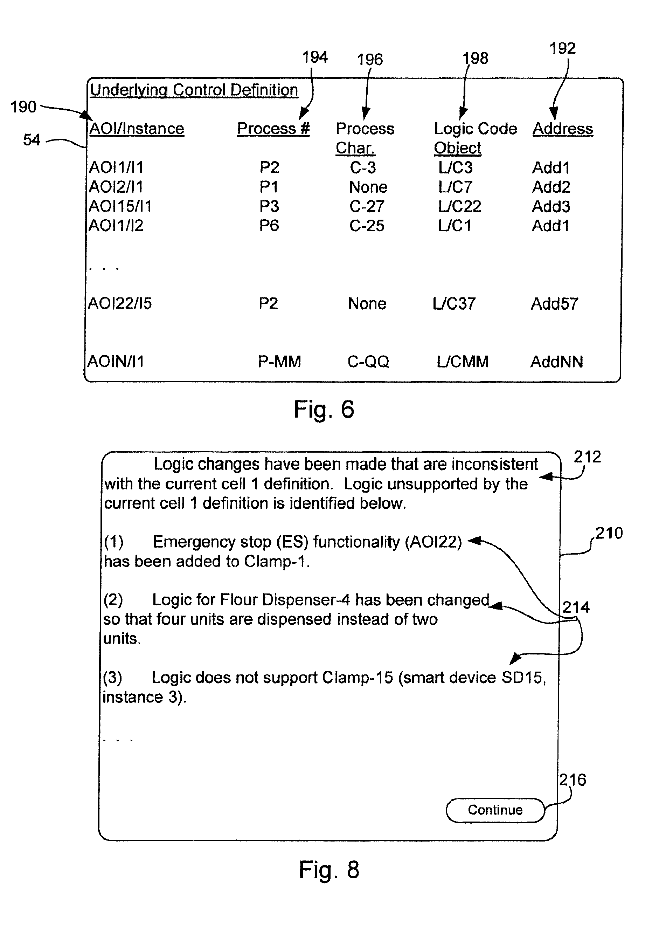

Hereafter it should be appreciated that exemplary data construct SD1 and other data constructs explained hereafter (e.g., the underlying cell definition 26, the AOI data constructs 82 in Fig. 5, the control definition 54 in Fig. 6, etc.) are shown in a simplified conceptual form in order to simplify this explanation and that the actual constructs would be far more complex/sophisticated in an operational system. One of ordinary skill in the art would understand the structure and operation of each construct described in the specification.

Referring still to Fig. 2, the library data construct corresponding to device SD1 is shown generally in a table format to facilitate this explanation only and, in an actual system, may take other forms. Data construct DS1 includes a graphic/simulation object 62 and a process table 63. Object 62 includes a three-dimensional parametric graphic representation of an instance of the first type of clamp device SD1 that can be presented to a workstation user via workstation 18. The graphic representation can be viewed from any angle, can be zoomed in and zoomed out and can be moved within a workspace on the display screen. In addition, object 62 includes simulation code that can be performed to animate the graphic representation of the first clamp instance to show the first clamp performing any of a plurality of processes that can be performed by a clamp of the first type in real life. Thus, for instance, a clamp of the first type may be able to open and close, rotate clockwise, rotate counter-clockwise, etc. Here, the simulation code can animate the graphic representation to show the clamp closing, opening and rotating. To control animation, object 62 can receive process commands. In the present embodiment, the process commands may take the form of PLC commands generated by a PLC running a program. Thus, where a PLC runs a program usable to control a real life instance of a clamp of the first type, the PLC can also run that program to control animation of an instance of the first clamp type shown on a workstation display screen.

Referring still to Fig. 2, process table 63 includes a process number column 64, a process characteristics column 66 and an action column 68. Process number column 64, as the label implies, lists all of the processes that may be performed by an instance of a clamp device of the first type. Exemplary processes in column 64 include an open process P1, a close process P2, a rotate clockwise process P3, a rotate counter-clockwise process P4, etc. Process characteristics column 66 lists variable characteristics for at least a subset of the processes in column 64. For example, in the case of the close process P2 in column 64, characteristics C-1 and C-2 may correspond to a closing speed and the point to which the instance of the clamp should be closed. Speed and the degree of clamp closing may be variable characteristics that can be set by a user of workstation 18. Some processes do not have variable characteristics. For example, see process P1 where no variable characteristics are shown in column 66.

Referring yet again to Fig. 2, action column 68 lists different actions for different combinations of processes and characteristics in columns 64 and 66. For example, for process P1 in column 64, action A1 is listed in column 68. Each action is useable to provide an action command to an instance of the graphic/simulation object 62 during a design process or during a simulation process. To this end, in at least some embodiments, each action may simply receive a command from a system controller for a specific process to be performed and, in response, generate an instruction for the graphic/simulation object instance where the command causes the graphic/simulation object to show the corresponding process in an animated fashion. For instance, in at least some embodiments where a programmable logic controller PLC is used to control manufacturing processes, object A1 may simply correspond to a specific PLC output command which, when received, causes the object A1 to generate animation of the associated process. In addition to passing PLC commands to graphic/simulation objects, actions in column 68 may also specify feedback signals to be provided to a controlling PLC during simulation activities when specific process cycles or sub-cycles have been completed.

Referring again to Fig. 1, an engineer can use workstation 18 to access the device library 26 and graphically specify devices needed to manufacture a product, processes to be performed by those devices and sequences of the processes to be performed by the devices. Hereinafter, a group of devices that cooperate to perform a manufacturing process will be referred to as a cell.

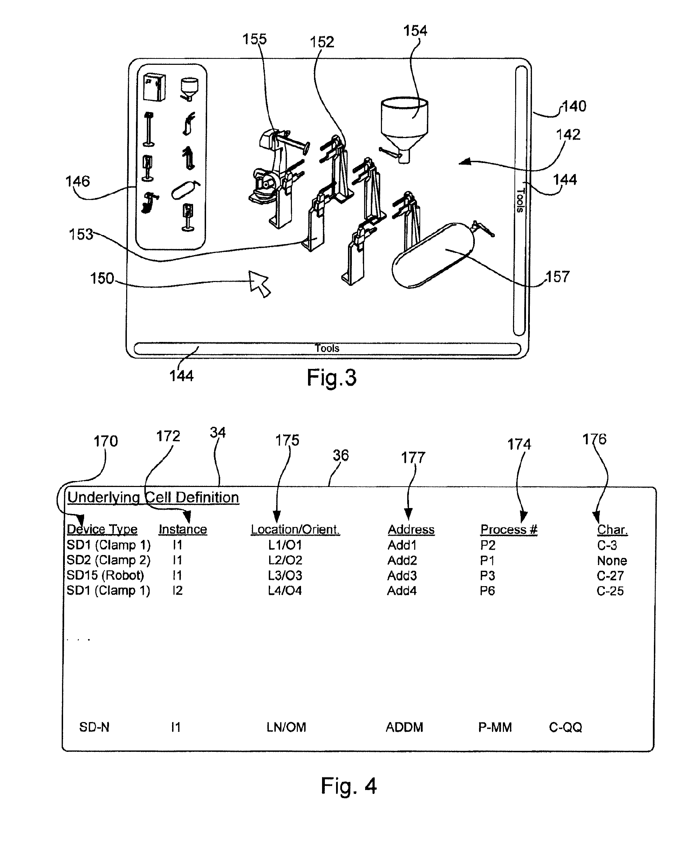

Referring now to Fig. 3, an exemplary screen shot 140 that may be presented via workstation 18 during a cell design process is illustrated. In Fig. 3, screen shot 140 includes a cell workspace 142, tool bars schematically identified by numeral 144 along a lower edge and a right-hand edge and a device selection box 146 in the upper left-hand corner. Here, devices can be added to a cell by simply using a mouse controlled cursor 150 or the like to select a device from box 146 and drag the device into workspace 142. Once in workspace 142, a selected device can be moved to any location and into any orientation with respect to other devices within the cell that does not result in a positional conflict. Although not shown, once a device has been added to a cell, the workstation user can select different processes to be performed by the device as well as process characteristics. In addition, after device processes have been selected or during the selection of device processes, a workstation user can specify the sequence of those processes. Software and algorithms for specifying processes and sequences are known in the art and therefore are not described here in the interest of simplifying this explanation. In Fig. 3, exemplary cell devices include, among others, a clamp of a first type 152, a clamp of a second type 153, a material dispenser 154, a robot device 155 and a tank 157.

Referring once again to Fig. 1, cell sub-database 28 includes a plurality of cell instances collectively identified by numeral 30. Each of the cell instances has a similar configuration and operates in a similar fashion and therefore, in the interest of simplifying this explanation, only Cell 1 will be described here in any detail. Cell 1 includes a graphical representation 32 and an underlying cell definition 36. The graphical representation 32, as the label implies, includes all the information to render cell devices graphically during the cell designing process and subsequently during a simulation process. Thus, for instance, referring once again to Fig. 3, graphical representation 32 includes all the information needed to render a combination of devices shown in workspace 42 and to animate those devices when PLC commands are received and to provide feedback to the PLC during the animation process.

Referring to Fig. 4, an exemplary underlying cell definition 36 is illustrated. Exemplary cell definition 36 includes a cell definition table having a device type column 170, an instance column 172, a location/orientation column 175, an address column 177, a process number column 174 and a process characteristics column 176. Column 170 lists the device type for each one of the devices in a cell. Exemplary device types in column 170 include a clamp of the first type SD1, a clamp of the second type SD2, a robot device SD15, etc. Instance column 172 lists instance identifiers for each one of the device types in column 170. Where there are five instances of a device of a specific type, there will be five separate instance indicators in column 172. In Fig. 4 there are two instances I1 and 12 listed in column 172 for clamps of the first type SD1. Location/orientation column 175 indicates a location and an orientation of each one of the device instances in column 172 within a cell. For example, referring again to Fig. 3, while each of clamp devices 152 and 153 may be of the same device type, each is at a different location and is in a different orientation within the illustrated cell.

Address column 177 lists a logical network/communication address for each device instance specified by columns 170 and 172. For instance, address Add1 in column 177 may include a Media Access Control (MAC) address for the first instance 11 of device type SD1 in the cell. Other network address types are contemplated. The logical addresses are assigned, at least provisionally, by server 20 or some other clearinghouse server (not illustrated) that is attached to network 16 during the cell specifying process.

Referring still to Fig. 4, process number column lists one process to be performed by the instance of an associated device in column 172. Here, the process number in column 174 corresponds to one of the plurality of different processes that could be performed by the associated device. For example, referring once again to Fig. 2, for clamps of the first type SD1, that type of clamp can perform any of the different processes that are listed in column 64. Any one of those processes may be included in column 174 in Fig. 4. Process characteristics column 176 lists process constraints on the process in column 174 such as, for example, clamp closing speed, the point to which a clamp should close, etc.

Referring still to Fig. 4, the sequence of processes in column 174 define a manufacturing sequence, thus in the present example, cell definition 36 begins with the first instance I1 of device type SD1 performing process number P2 and being constrained by characteristic C3. Thereafter, the first instance of device type SD2 performs process P1 followed by the first instance of device type SD15 performing process P3 while constrained by constraint C27. Continuing, the second instance 12 of device type SD1 performs process P6 pursuant to constraint C25.

Referring once again to Fig. 1 control/specifying system 14 includes a workstation 38, a control/specifying server 40 and a control code database 42. Workstation 38 is similar to workstation 18 described above and, to that end, includes a computer, an input keyboard or the like and an output display screen. Server 40 runs software programs that enable a control engineer to use workstation 38 to generate PLC or other controller type code for controlling a machine line.

Control code database 42 includes control design software programs 44, an add on instructions (AOIs) library 46 and a control specification sub-database 48. In at least some embodiments database 42 also includes a copy 36' of the underlying cell definitions stored in the mechanical database 22. Design software 44 includes software run by server 40 that enables a workstation user to generate control code for a manufacturing cell. In addition, software 44 includes code used to perform the processes that are consistent with the present invention and that are described below.

Referring still to Fig. 1, AOI library 46 includes a plurality of AOI objects or data constructs that can be used to generate code for each of the devices in the device library 26. Referring also to Fig. 5, an exemplary AOI library 46 includes a device/AOI table 80 and AOI objects, five of which are collectively identified by numeral 82. Table 80 correlates devices from library 26 (see again Fig. 1) with AOI objects. To this end, table 80 includes a device column 84 and an AOI objects column 86. Each device for which an object exists in library 26 is listed in column 84. AOI object column 86 lists at least one AOI for each of the devices in column. 84. In at least some cases it is contemplated that a single AOI object may be associated with more than one device type in column 84. For example, in Fig. 6 AOI1 is associated with each of devices SD1 and SD2 in table 80. Where an AOI is associated with more than one device that simply means that an instance of the single AOI may be used to provide control code for any one of the associated devices. For instance, while there may be two different types of clamps and therefore two different device types SD1 and SD2, a single AOI may be useable to specify code for each of the two clamp types.

Referring still to Fig. 5, each of objects 82 is similarly configured and is used in a similar fashion and therefore, in the interest of simplifying this explanation, only object AOI1 will be described here in detail. Object AOI1 is shown in a simplified conceptual table form and includes a process number column 90, a process characteristics column 92 and a logic/code column 94. Process number column 90 lists each process that can be performed by a device associated with object AOI1. In the present example, the list of processes corresponds to the list of processes in column 64 shown in Fig. 2 and thus include an open process P1, a closed process P2, a rotate clockwise process P3, a rotate counter-clockwise process P4, etc.

Referring still to Fig. 5, process characteristics column 92 lists process characteristics for each of the processes in column 90. In the illustrated example, the process characteristics in column 92 are identical to the process characteristics in column 66 shown in Fig. 2. In Fig. 5, the characteristics in column 92 are simply place holders which are filled in with variable values after instances of the AOI object are instantiated and an engineer specifies those values.

Referring yet again to Fig. 5, logic/code object column 94 includes a separate code generating object for each one of the process and characteristic combinations in columns 90 and 92. Exemplary logic/code objects include L/C1, L/C2, etc. As the label implies, each one of the objects L/C1, L/C2, etc., is usable by server 40 to generate control code for associated devices added to a cell.

Referring yet again to Fig. 1, control specification sub-database 48 includes a plurality of control specifications collectively identified by numeral 50. After a control specification has been generated for a cell (see again 30 in Fig. 1), the control specification is stored in database 48. Each of the control specifications 50 shown in Fig. 1 is similar in configuration and in use and therefore only Control Specification 1 will be described here in any detail. Specification 1 includes a program code section 52 and an underlying control definition 54. Code 52 includes program code useable by a PLC or other type controller for controlling actions and sequences of actions of cell devices that cooperate together to perform a manufacturing process. In at least some cases code 52 is in a relay ladder logic form although other programming languages are contemplated.

Referring now to Fig. 6, an exemplary underlying control definition 54 is illustrated which will be described in greater detail below. Here, it should suffice to say that control definition 54 has a form that is similar to the cell definition shown in Fig. 4 where, for the cell definition and the control definition to be consistent, there must be a logic/code object in definition 54 for each one of the processes in column 174 of definition 36 and visa versa.

Referring once again to Fig. 1, each of workstations 18 and 38, servers 20 and 40 and databases 22 and 42 are linked to communication network 16 to enable communication between server 20, workstation 18 and database 22, to enable communication between server 40, workstation 38 and database 42 and to enable communication between servers 20 and 40. Network 16 may take any of several different forms including the internet, a local area network, a wide area network or any other type of network or combination of networks known in the art. For instance, each system 12 and 14 may be separately linked via distinct first and second LANs where only servers 20 and 40 are linked to common network 16.

Referring once again to Fig. 1, consistent with at least some aspects of the present invention, after all aspects of the device library 26 have been specified and stored in database 22, add-on instruction objects (see again 82 in Fig. 5) for each device in the library 26 can be specified via workstation 38 and stored in library 46. Thereafter, a mechanical engineer can use workstation 18 to create a cell, to add instances of devices from library 26 to the cell, to specify actions to be performed by each device in the cell, to specify process or action characteristics that variably define the actions to be performed and to define or specify sequences of the actions to be performed thereby creating a graphical representation 32 of the cell and an underlying cell definition 36 (see again Fig. 4). After the underlying cell definition 36 has been formed, the underlying cell definition may be transferred via the Extensible Markup Language (XML) or some other type of general-purpose markup language and communication network 16 to server 40 where server 40 stores a copy of the definition 36' in database 42.

Referring still to Fig. 1, a control engineer uses workstation 38 to access the underlying cell definition 36' to identify cell devices, actions and sequences and to generate code for controlling those devices, actions and sequences. To this end, the control engineer uses software 44 to access the AOI library 46 and to select suitable AOI objects for each of the devices in the cell definition 36'. After or as AOI objects are selected, the control engineer can specify process characteristics that are consistent with the process characteristics specified in the underlying cell definition 36'. Through the process of selecting AOI objects and specifying process characteristics, the control engineer specifies logic/code objects (see column 94 again in Fig. 5) and an underlying control definition 54 as shown in Fig. 6 is instantiated.

Referring now to Fig. 6, the exemplary underlying control definition 54 includes an AOI/instance column 190, an address column 192, a process number column 194, a process characteristics column 196 and a logic/code object column 198. Columns 190 and 194 together list instances of AOI objects and processes performed thereby that have been specified by a control engineer using workstation 38. Thus, for example, columns 190 and 194 together specify that the first instance of AOI1 is to perform process P2. Similarly, columns 190 and 194 indicate that the first instance of the AOI2 object is to perform process P1 and so on. Address column 192 indicates the logical address of an instance of a device associated with the AOI/instance combination in column 190 and should match the addresses in the underlying cell definition 36 associated therewith. Process characteristics column 196 lists constraints on each of the processes in column 194. Logic/code object column 198 lists a logic/code object corresponding to a specific AOI which is usable to generate code to control the device at a corresponding network address in column 192 to perform the associated process in column 194.

Referring once again to Figs. 4 and 6, in order to control the device instances specified by combinations in columns 170 and 172 to perform the processes in column 174 in the sequence specified by the underlying cell definition 36, there has to be an add-on instruction instance in column 190 for each instance in columns 170 and 172 and the add-on instruction instance in column 190 must be instantiated so that the process in column 194 matches the process in column 174. Here, where there is not a correlation between add-on instruction instances and processes on one hand and device instances and processes on the other, control problems can occur.

After an underlying cell definition has been completely specified and transferred to server 40 for use by a control engineer, the control engineer may either inadvertently or purposefully specify a control definition 54 that is not completely consistent with the cell definition 36. For example, the control engineer may fail to specify an AOI instance and corresponding process for one of the device instances and corresponding processes in cell definition 36. As another example, a control engineer may specify one or more AOI instances or instance and process combinations that do not correspond to device instances or device instance and process combinations in the cell definition 36.

Where cell and control definitions are inconsistent, in the past, it was necessary for a control engineer to recognize the inconsistencies and provide a manual notice to the mechanical engineer indicating that the mechanical engineer should modify the cell definition accordingly. Clearly this manual notice process is fraught with problems.

According to at least one aspect of the present invention, after cell and control definitions have been completed, server 40 may be programmed to, either automatically or upon command from the control engineer, compare the two definitions and identify inconsistencies. Where inconsistencies occur, in at least some embodiments, those inconsistencies may be brought to the attention to the control engineer so that, if the control engineer desires, the control engineer can correct the inconsistencies using the control workstation 38. In other cases where the control engineer intended for the inconsistencies to occur, those inconsistencies could be electronically transmitted to the mechanical engineer and notice could be given via workstation 18 thereby prompting the mechanical engineer to either eliminate the inconsistencies or follow up with the control engineer. In other embodiments where inconsistencies occur between the control and cell definitions, those inconsistencies can automatically be communicated to the mechanical engineer for subsequent analysis and consideration.

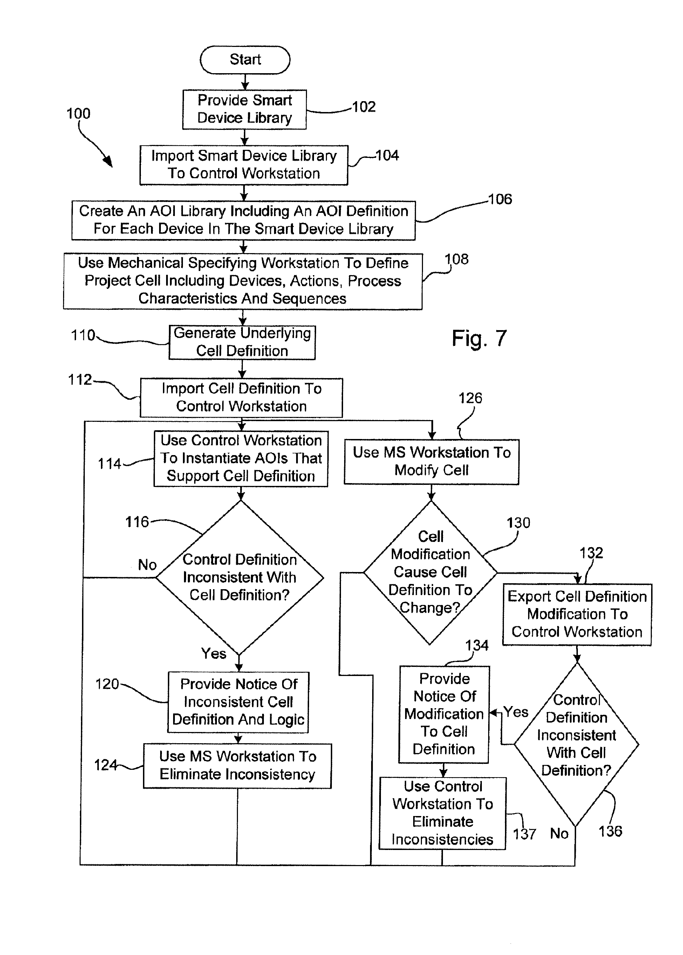

Referring now to Fig. 7, an exemplary process 100 for specifying a process and control information for a manufacturing process and providing notice when underlying definitions are not synchronized and that may be performed by or using system 10 is illustrated. Referring also to Fig. 1, at block 102, a device library 26 is provided and stored in database 22. At block 104, the device library is imported to control workstation 38 and is used as a guide by a control engineer to create an add on instruction library including AOIs for each device in the device library. The AOI library is stored in database 42 (see 46).

Continuing, at block 108, a mechanical engineer uses workstation 18 to define a project cell including devices, actions, process characteristics and sequences of the device actions. At block 110, an underlying cell definition 36 (see also Fig. 4) is generated by server 20 and stored in database 22. At block 112, the cell definition 36 is imported to the control workstation 38 and stored as a copy 36' in database 42.

At block 114, a control engineer uses workstation 38 to select add-on instructions that support the imported cell definition. Here, selection includes selecting AOIs for each device in the cell, selecting specific processes to be performed by each AOI, specifying process characteristics and sequencing the processes. At block 116, the control and cell definitions are compared. Where there is no inconsistency between the control and cell definitions, control passes back up to block 114. Where at least one inconsistency exists between the control and cell definitions at block 116, control passes to block 120 where notice of the inconsistency is presented to the mechanical engineer at workstation 18. Here, in at least some embodiments, the inconsistencies may be transmitted as XML packets and server 20 may unpack the packets and use the received information to formulate final notices. At block 124 the mechanical engineer uses workstation 18 to eliminate the inconsistency.

Referring now to Fig. 8, an exemplary screen shot 210 that may be presented via workstation 18 to the mechanical engineer for identifying inconsistencies between the cell and control definitions is illustrated. Screen shot 210 includes a notice statement 212 indicating that logic changes were made that are inconsistent with the cell definition as well as enumerated inconsistencies shown at 214. The inconsistencies include statements that an emergency stop functionality has been added to a first clamp, that the duration of a flower dispensing process has been extended and that no logic has been specified for clamp 15. In response to receiving screen shot 210, the mechanical engineer would manually address each of the inconsistencies by either eliminating the inconsistency or contacting the control engineer to discuss the inconsistency.

Referring once again to Fig. 7, in at least some embodiments it is also contemplated that, after a cell definition has been completed, when a mechanical engineer alters or modifies a cell in a way that renders the cell definition inconsistent with the control definition, a notice of the modification is provided to the control engineer so that the engineer can consider the inconsistency and its effect on the control system. To this end, at block 126, workstation 18 (see again Fig. 1) may be used to modify a cell 30. At block 130, after a cell has been modified, server 20 determines whether or not the cell modification has caused a cell definition change to occur. Where no cell definition change has occurred, control may pass back up to blocks 114 and 126.

Where a cell definition change has occurred at block 130, control passes to block 132 where server 20 exports the cell definition modification to server 40. Continuing, at block 136, server 40 compares the modified cell definition with the corresponding control definition and identifies any inconsistencies. Where there are no inconsistencies, control passes back up to blocks 114 and 126 where the process continues. Where a inconsistency exists, control passes to block 134.

Referring still to Figs. 1 and 7, at block 134, notice is provided to the control engineer via workstation 38 that the cell definition has been modified and that an inconsistency exists between the cell and control definitions. At block 137, the control engineers uses workstation 38 to eliminate the inconsistencies after which control passes back up to blocks 114 and 126 where the process continues.

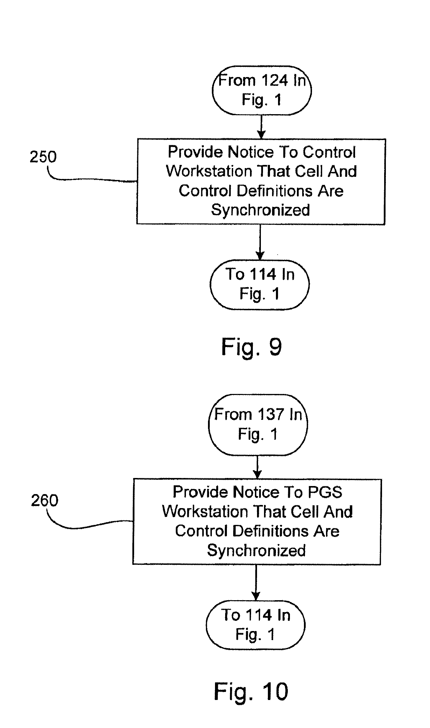

In at least some embodiments it is contemplated that, after a first engineer performs some activity that results in one or more inconsistencies between the cell and control definitions, when a second engineer eliminates the inconsistencies, a notice may be provided to the first engineer confirming that the control and cell definitions have been synchronized and are consistent. To this end, referring to Fig. 9, a sub-process 250 that may be added to the process shown in Fig. 7 is illustrated for providing notice at a control workstation after an engineer eliminates inconsistencies between the definitions.

Referring also to Fig. 7, after a mechanical engineer uses workstation 18 to eliminate inconsistencies at block 124, control passes to block 250 in Fig. 9. At block 250, notice is provided at control workstation 38 indicating that the cell and control definitions have been synchronized. After block 250, control passes back up to blocks 114 and 126 in Fig. 7 where the process continues.

Similarly, Fig. 10 illustrates a sub-process 260 that may be included in the process shown in Fig. 7 for providing notice to a mechanical engineer after control and cell definitions have been synchronized by a control engineer. Referring again to Fig. 7, after block 137 where a control engineer synchronizes the definitions, control passes to block 260 in Fig. 10 where notice of synchronization is provided at workstation 18. After block 260, control passes back up to blocks 114 and 126 in Fig. 7 where the process continues.

While the system 10 described above and illustrated in Fig. 1 includes two systems 12 and 14, it should be appreciated that the present invention may be used to synchronize more than two systems used in the automated design process. For example, where a separate software program is used to generate electrical designs for distributing power within a manufacturing facility and to different devices or assemblies within facility cells, the electrical design system may be synchronized with process/simulation system 12 and control system 14 in a fashion similar to that described above. Similarly, where a separate enterprise resource planning (ERP) system is provided for managing business processes such as maintenance costs, delivery of resources required by manufacturing process, training of employees, etc., inconsistencies between ERP information and information in other systems can be automatically identified and noticed so that inconsistencies can be eliminated.

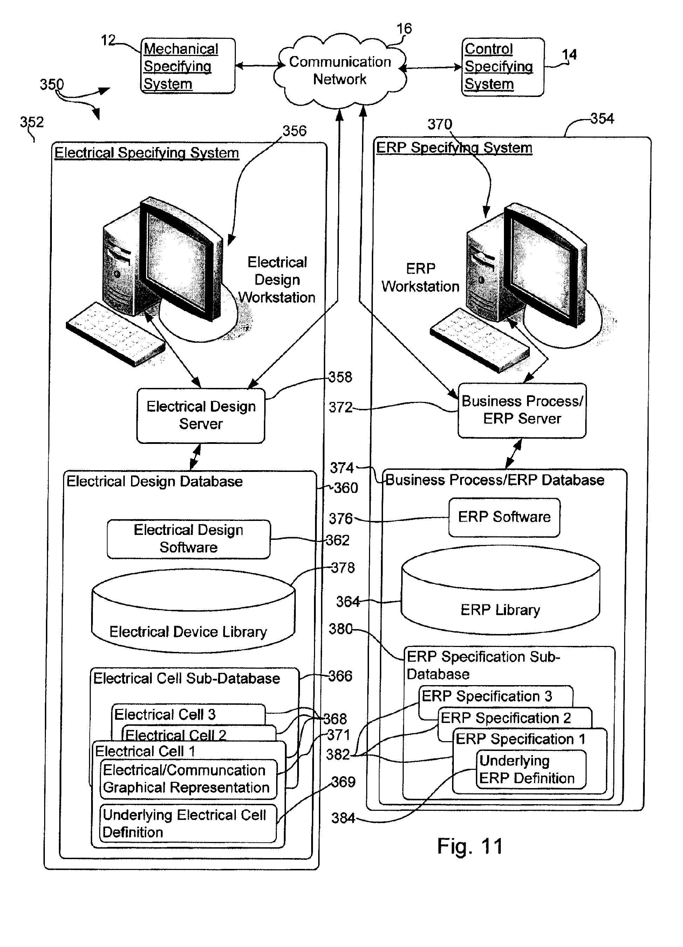

Consistent with the above, referring now to Fig. 11, an exemplary system 350 is illustrated that includes a mechanical specifying system 12, a control specifying system 14 and a communication network 16 as described above. In addition, system 350 includes an electrical specifying system 352 and an enterprise resource planning (ERP) specifying system 354 that are each linked to network 16. Electrical design system 352 includes a workstation 356, a server 358 and an electrical design database 360. The design database 360 includes electrical design software run by server 358, an electrical device library 378 and an electrical cell sub-database 366. Device library 378 is similar to the libraries described above with respect to Fig. 1 except that each object stored within library 378 specifies information corresponding to electrical devices that may be needed to define an electrical system for a cell. Electrical cell sub-database 366 includes a plurality of electrical cells identified collectively by numeral 368. Here, it is contemplated that there would be a separate cell 368 for each of the cells 30 in database 28 (see again Fig. 1). Each cell 368 includes a graphical electrical layout representation 371 and an underlying cell definition 369 which are akin to the representation 32 and definition 36 described above with respect to Figs. 1 and 4.

Referring still to Fig. 10, ERP system 354 includes a workstation 370, a server 372 and a business process/ERP database 374. Database 374 includes ERP software 376 run by server 372, an ERP library 364 and an ERP specification sub-database 380. Library 364 includes objects corresponding to different devices and processes associated there with. Database 380 stores a separate ERP specification for each cell 30 in database 22 (see again Fig. 1) where exemplary ERP specifications are collectively identified by numeral 382. Among other information, each of the ERP specifications includes an underlying EPR definition 384 which is generated as a user uses workstation 370 to specify and instantiate and ERP specification.

Referring yet again to Fig. 10, each of servers 358 and 372 is linked to network 16. Thus, the underlying electrical, EPR, and cell definitions can be transmitted to control system 14 and, after a control definition has been specified, differences between the control specification and the other specifications can be identified and notice of those differences or inconsistencies can be provided to the appropriate one or more of the other systems 12, 352 and 354 so that users of those systems can consider the inconsistencies and, in at least some cases, eliminate those inconsistencies.

In at least some embodiments it is contemplated that, in addition to identifying inconsistencies between underlying definitions, a system may be programmed to identify ways to eliminate those inconsistencies and to either to automatically adopt definition changes that eliminate the inconsistencies or provide suggest best practice options to systems users for eliminating those inconsistencies. Thus, for example, where a control engineer recognizes that an emergency stop has to be added to a cell for locally controlling a clamp device that already exists in the cell and where the cell does not initially include a local control panel for the clamp, when the control engineer uses the AOI library and workstation 38 (see again Fig. 1) to provide logic to support an emergency stop button, either server 40 or server 20 may be programmed to recognize that a local control panel needs to be added to the cell that includes a stop button. In some cases server 20 may automatically instantiate an instance of a control panel device and add the instance to the cell. In other embodiments a control panel may be suggested to the mechanical engineer via workstation.

In most cases, while likely or best practice suggestions may be helpful to the control and mechanical engineers, the engineers typically will prefer that cells and control specifications not update automatically. This is because the overall design process is typically a give and take process between all engineers involved and there will inevitably be instances where one engineer may instantiate an AOI or device not knowing that the selection cannot or should not be employed for some reason.

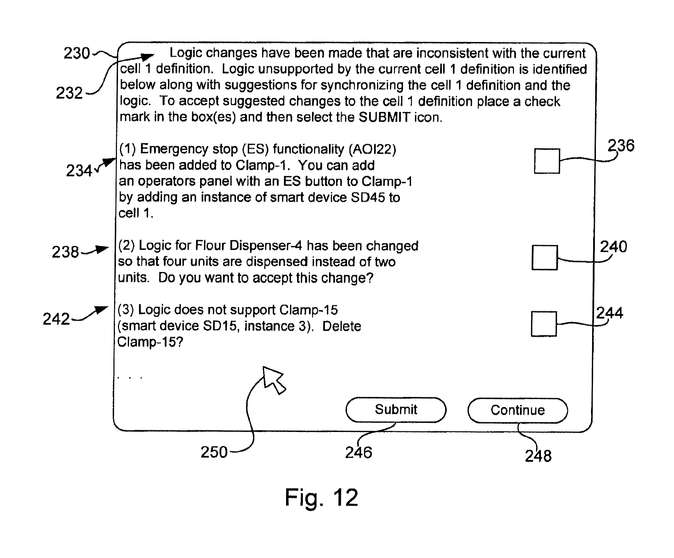

Referring now to Fig. 12, an exemplary screen shot 230 for providing notice of inconsistencies in definitions to a mechanical engineer is shown. Here, shot 230 includes a notice statement 232 along with separate statements 234, 238 and 242 enumerating identified inconsistencies. In addition, shot 230 includes check boxes 236, 240 and 242, respectively, along with a SUBMIT icon 246 and a continue icon 248. Boxes 236, 240 and 244 can be selected via a mouse controller cursor 250 or the like and, after boxes are selected, the selections may be submitted by selecting icon 246. Icon 248 allows the engineer to proceed without accepting suggested cell changes. Here, where at least a subset of suggested changes are accepted, other steps may be required to position graphical representation of devices added to the cell, to select actions for the devices, to specify process characteristics and to synchronize device processes with processes performed by other cell devices.

One or more specific embodiments of the present invention have been described above. It should be appreciated that in the development of any such actual implementation, as in any engineering or design project, numerous implementation-specific decisions must be made to achieve the developers' specific goals, such as compliance with system-related and business related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Thus, the invention is to cover all modifications, equivalents, and alternatives falling within the spirit and scope of the invention as defined by the following appended claims. For example, while the system 10 is described above (see Fig. 1) as including two separate servers 20 and 40 and separate databases 22 and 42 and workstations 18 and 38, in some embodiments a single server, database and/or workstation may be includes in the system 10.

In addition, while the system described above includes control specifying server 40 that operates as a clearing house type server for identifying definition inconsistencies, in other embodiments that process may be distributed among various system servers. For instance, in the Fig. 1 system 10 that includes the mechanical specifying system 12 and control specifying system 14, server 40 may be programmed to provide a copy of the underlying control definitions 54 to server 20 which are then stored in database 22 (i.e., both the underlying cell and control definitions would be stored in both databases 22 and 42. Here, where a cell definition is modified using workstation 18 and an inconsistency between the control and cell definitions results, server 20 could recognize the inconsistency instead of server 40 and notice could be provided. Here, in the distributed system server 20 would still identify inconsistencies that result from control definition changes made via workstation 38 and provide notice of those inconsistencies.

To apprise the public of the scope of this invention, the following claims are made:

## Claims

1. A method for synchronizing activities during design of an industrial automated system wherein the automated system includes a plurality of different features and the design of the automated system requires at least first and second different information types, the method comprising the steps of:
using a first software program to specify a first type system definition including a set of first information type instances corresponding to the automated system;
after the first type system definition has been specified, using a second software program to specify a second type system definition including a set of second information type instances corresponding to the automated system;
after the second type system definition has been specified, comparing the first and second system definitions to identify system features supported by only one of the first and second type system definitions; and
where only one of the first and second type system definitions supports a system feature, the second software program providing notice to the first software program indicating that the first and second type system definitions are imperfectly correlated.

2. The method of claim 1 wherein the first and second information types each includes a different one of mechanical and control logic information types, or
wherein the first and second information types each includes a different one of enterprise resource planning, mechanical, control logic and electrical layout information types, or
further including the steps of, prior to the step of using the first software program to specify a first type system definition:
providing a first information type library including first type information instances for each of the different feature types that may be included in the automated system; and
providing a second information type library including second type information instances for each of the first type information instances;
the step of using the first software program to specify a first type system definition including using the first software program to select first type information instances from the first type information library to provide the first type system definition for the automated system; and
the step of using a second software program to specify a second type system definition including using the second software program to select second type information instances from the second type information library to provide a second type system definition for the automated system, and/or
wherein the first type information library includes a device library including device instances corresponding to devices that may be used during an automated system design process and actions that each device may perform and the second type information library includes an add on instruction (AOI) library including an AOI for each of the devices in the device library wherein each AOI includes logic for controlling an associated device during each of the actions that the device may perform, and/or
wherein each device instance includes a device software object and each AOI includes an AOI software object.

3. The method of claim 1 further including the steps of, after the second type system definition has been specified, using the first software program to alter the first type system definition so that the first and second type system definitions are perfectly correlated, or
further including the steps of, after the second type system definition has been specified, using the first software program to alter the first type system definition by adding an additional instance of the first information type that is unsupported by the second type system definition, the first software program providing notice to the second software program indicating that the additional instance of the first information type has been added to the first type system definition, or
further including the steps of, after the second type system definition has been specified, using the first software program to alter the first type system definition by deleting at least one of the specified first information type instances from the first type system definition, the first software program providing notice to the second software program indicating that the at least one of the first information type instance has been removed from the first type system definition or
wherein the notice indicates the system feature that is only supported by one of the first and second type system definitions, when the notice is received, the method further including the step of, when only the first system definition supports the system feature, running the first program to identify the first information type instance in the first type system definition that supports the system feature and, when only the second system definition supports the system feature, running the first program to identify a first information type instance that supports the system feature, and/or
further including the step of, when the first program identifies the first information type instance in the first type system definition that supports the system feature, running the first program to delete the first information type instance from the first type system definition.

4. The method of claim 3 further including the step of, when the first program identifies the first information type instance that supports the system feature, running the first program to add the first information type instance to the first type system definition, or
further including the steps of, when only the first system definition supports the system feature, presenting the identified first information type instance in the first type system definition that supports the system feature and, when only the second system definition supports the system feature, presenting the identified first information type instance that supports the system feature.

5. The method of claim 1 wherein the notice is provided via an extensible mark up language.

6. A method for synchronizing activities during design of an industrial automated system
wherein the automated system includes a plurality of different features and the design of the automated system requires a plurality of different information types, the method comprising the steps of:
(i) using different software programs to specify a plurality of different type system definitions for the automated system, each program used to specify a different one of the system definitions, each type system definition including a set of different information type instances corresponding to the automated system;
(ii) comparing the different type system definitions to identify system features supported by less than all of the different type system definitions;
(iii) where less than all of the different type system definitions supports a system feature and a subset of the software programs were used to specify the different type system definitions that do support the system feature, automatically providing notice to the software programs other than the subset of the software programs used to specify the different type system definitions that do support the system feature indicating that the different type system definitions are imperfectly correlated.

7. The method of claim 6 wherein the step of comparing includes comparing to identify system features supported by only one of the different type system definitions, or
wherein at least a subset of the plurality of information types each includes a different one of mechanical and control logic information types or
wherein at least a subset of the plurality of information types each includes a different one of enterprise resource planning, mechanical, control logic and electrical layout information types.

8. The method of claim 6 further including the steps of using any of the software programs to make changes to associated system definitions and repeating steps (ii) and (iii) to identify system features that are not completely supported and provide notice of imperfectly correlated system definitions to software programs.

9. The method of claim 6 wherein each information type instance is a software object and wherein each information type includes objects of a type that are different than objects of the other information types.

10. A method for synchronizing activities during design of an industrial automated system, the method comprising the steps of:
providing a device library including instances of devices that may be used during the design process and actions that each device may perform;
creating an add on instruction (AOI) library including an AOI for each of the devices in the device library wherein each AOI includes logic for controlling an associated device during each of the actions that the device may perform;
using a first software program to specify a cell definition for the automated system, the cell definition including a set of devices and at least one action for each instance of a devices in the set;
after the cell definition is specified, using the second software program to select AOIs from the AOI library to provide a logic specification for controlling the automated system;
after the logic specification has been specified, where at least one of:
(i) at least one AOI in the logic specification specifies logic for a device other than the devices in the cell definition; and
(ii) at least one of the devices in the cell definition specifies a device that is unsupported by the logic specification;
the second software program providing notice to the first software program that the cell definition imperfectly correlates with the logic specification.

11. The method of claim 10 wherein the step of providing notice includes, where at least one AOI in the logic specification specifies logic for a device other than the devices in the cell definition, indicating the at least one AOI in the logic specification that specifies logic for a device other than the devices in the cell definition and, where at least one of the devices in the cell definition specifies a device that is unsupported by the logic specification, indicating the at least one of the devices in the cell definition that specifies a device that is unsupported by the logic specification.

12. The method of claim 11 further including the step of, where at least one of the devices in the cell definition specifies a device that is unsupported by the logic specification, running the first program to delete the one of the devices from the cell definition.

13. The method of claim 3 further including the step of, where at least one AOI in the logic specification specifies logic for a device other than the devices in the cell definition, running the first program to identify a device associated with the at least one AOI in the logic specification, and/or
further including indicating the identified device to a first program user.

14. An apparatus for synchronizing activities during design of an industrial automated system wherein the automated system includes a plurality of different features and the design of the automated system requires at least first and second different information types, the apparatus comprising:
at least one processor programmed to perform the steps of:
receiving information from a user specifying a first type system definition including a set of first information type instances corresponding to the automated system;
after the first type system definition has been specified, receiving information from a user specifying a second type system definition including a set of second information type instances corresponding to the automated system;
after the second type system definition has been specified, comparing the first and second system definitions to identify system features supported by only one of the first and second type system definitions; and
where only one of the first and second type system definitions supports a system feature, providing notice to the user that specified the first type system definition indicating that the first and second type system definitions are imperfectly correlated.

15. A design system for synchronizing activities during design of an industrial automated system, the design system comprising:
a first database storing a device library including instances of devices that may be used during the design process and actions that each device may perform;
a second database storing an add on instruction (AOI) library including an AOI for each of the devices in the device library wherein each AOI includes logic for controlling an associated device during each of the actions that the device may perform;
a first processor running a first software program usable by a first user to specify a cell definition for the automated system, the cell definition including a set of devices and at least one action for each instance of a devices in the set;
after the cell definition is specified, a second processor running a second software program usable by a second user to select AOIs from the AOI library to provide a logic specification for controlling the automated system, after the logic specification has been specified, the second processor further programmed to perform the steps of comparing the logic specification to the cell definition and, where at least one of:
(i) at least one AOI in the logic specification specifies logic for a device other than the devices in the cell definition; and
(ii) at least one of the devices in the cell definition specifies a device that is unsupported by the logic specification;
providing notice to the first software program that the cell definition imperfectly correlates with the logic specification.
